# EUROPÄISCHE PATENTSCHRIFT

(11) **EP 1 463 692 B1**
(45) Veröffentlichungstag und Bekanntmachung des Hinweises auf die Patenterteilung: **24.05.2006**
(21) Anmeldenummer: 02805766.9
(22) Anmeldetag: 19.12.2002
(51) Int. Cl.: C04B 35/52, C25C 3/08, C25C 3/06, C01B 31/04

(54) **VERFAHREN ZUR HERSTELLUNG VON KATHODENBLÖCKEN**
METHOD FOR THE PRODUCTION OF CATHODE BLOCKS
PROCEDE DE PRODUCTION DE BLOCS CATHODES

(30) Priorität: 28.12.2001 DE 10164010
(43) Veröffentlichungstag der Anmeldung: 06.10.2004
(73) Patentinhaber: SGL CARBON AG, 65203 Wiesbaden (DE)
(72) Erfinder: DAIMER, Johann, 64546 Mörfelden-Walldorf (DE); HILTMANN, Frank, 65830 Kriftel (DE); MITTAG, Jörg, 65187 Wiesbaden (DE)
(74) Vertreter: Deckers, Hellmuth Alexander
(86) Internationale Anmeldenummer: PCT/EP2002/014558
(87) Internationale Veröffentlichungsnummer: WO 2003/055824

(56) Entgegenhaltungen:
- WO-A-00/46426
- DE-A- 2 311 467
- US-A- 4 071 604
- US-A- 4 847 021

## Beschreibung

Die Erfindung betrifft ein Verfahren zur Herstellung von Kathodenblöcken insbesondere für die elektrolytische Herstellung von Aluminium.

Bei der elektrolytischen Herstellung von Aluminium nach dem Hall-Héroult-Verfahren werden Elektrolysezellen eingesetzt, die einen aus einer Vielzahl von Blöcken zusammengesetzten Boden umfassen, der als Kathode wirkt. Der Elektrolyt ist eine Schmelze, im wesentlichen eine Lösung von Aluminiumoxid in Kryolith. Die Arbeitstemperatur liegt beispielsweise bei ca. 1000 °C. Das elektrolytisch abgeschiedene geschmolzene Aluminium sammelt sich auf dem Boden der Zelle unter einer Schicht des Elektrolyten. Um die Zellen ist ein metallisches Gehäuse (bevorzugt Stahl) mit einer Auskleidung aus hochtemperaturbeständigem Material.

Das Material der Kathodenblöcke ist wegen der erforderlichen chemischen und thermischen Beständigkeit bevorzugt Kohlenstoff, der durch thermische Behandlung teilweise oder vollständig graphitiert sein kann. Zur Herstellung solcher Kathodenblöcke werden Mischungen von Pechen, Koksen, Anthrazit und/oder Graphit in ausgewählten Teilchengrößen bzw. Teilchengrößenverteilungen für die Feststoffe gemischt, geformt und gebrannt und gegebenenfalls (teilweise) graphitiert. Das Brennen (Carbonisierung) erfolgt üblicherweise bei Temperaturen von ca. 1200 °C, die Graphitierung üblicherweise bei Temperaturen von über ca. 2400 °C.

Während graphitierte Kathoden wegen ihrer höheren elektrischen Leitfähigkeit bevorzugt werden, zeigen sie eine stärkere Abnutzung während des Betriebs, entsprechend einer mittleren jährlichen Abnahme ihrer Dicke von bis zu 80 mm. Diese Abnutzung ist nicht gleichmäßig über die Länge der Kathodenblöcke (entsprechend der Breite der Zelle) verteilt, sondern verändert die Oberfläche der Kathodenblöcke zu einem W-förmigen Profil. Durch den ungleichmäßigen Abtrag wird die Nutzungsdauer der Kathodenblöcke begrenzt durch die Stellen mit dem größten Abtrag.

Eine Möglichkeit, den Abtrag über die Länge des Kathodenblocks zu vergleichmäßigen und damit die Nutzungsdauer zu verlängern, besteht darin, die Kathodenblöcke so auszuführen, daß ihr elektrischer Widerstand über die-Länge variiert, derart daß die Stromdichte (und damit die Abnutzung) über ihre Länge gleichmäßig ist oder zumindest eine möglichst geringe Abweichung über die Länge von ihrem Mittelwert aufweist.

Eine Lösung ist in DE 20 61 263 beschrieben, wobei zusammengesetzte Kathoden gebildet werden entweder aus mehreren Kohlenstoffblöcken mit unterschiedlicher elektrischer Leitfähigkeit, die so angeordnet werden, daß sich eine gleichmäßige oder annähernd gleichmäßige Stromverteilung ergibt, oder aus Kohlenstoffblöcken, deren elektrische Widerstände in Richtung der kathodischen Ableitungen kontinuierlich zunehmen. Die Anzahl der Kohlenstoffblöcke und deren elektrischer Widerstand richten sich jeweils nach Zellengröße und Zellentyp, sie müssen für jeden Fall neu errechnet werden. Kathodenblöcke aus einer Vielzahl von einzelnen Kohlenstoff-Blöcken erfordern einen hohen. Aufwand bei der Konstruktion; auch müssen die Stoßstellen jeweils gut abgedichtet werden, um ein Ausfließen des flüssigen Aluminiums an den Stoßstellen zu vermeiden.

In der US 4,071,604 ist die Gmphitierung eines Kohleasmffköspers in einem Induktionsofen beschrieben, wobei dieser die einzige Wärmequelle ist.

In der WO 00/46426 ist eine Graphitkathode beschrieben worden, die aus einem einzelnen Block besteht, der eine über seineLänge veränderliche elektrische Leitfähigkeit aufweist, wobei die Leitfähigkeit an den Enden des Blocks niedriger ist als in der Mitte. Diese ungleichmäßige Verteilung der elektrischen Leitfähigkeit wird erreicht, indem während der Graphitierung die Endzonen auf eine Temperatur von 2200 bis 2500 °C gebracht werden, während die mittlere Zone einer Temperatur von 2700 bis 3000 °C ausgesetzt wird. Diese unterschiedliche Wärmebehandlung kann gemäß dieser Lehre durch zwei Weisen erreicht werden: einmal kann die Wärmeableitung im Graphitierungsofen unterschiedlich begrenzt werden, oder es können Wärmesenken in der Nachbarschaft der Endzonen eingebracht werden, die den Wärmeverlust erhöhen. Bei einer Quergraphitierung wird dabei die Dichte der wärmeisolierenden Schüttung so verändert, daß der Wärmeverlust über die Länge der Kathoden ungleichmäßig wird und damit die gewünschten Temperaturen eingestellt werden. Auch bei der Längsgraphitierung kann durch unterschiedliche Ausführung der wäuneisolierenden Schüttung des Wärmeverlustin der Nähe der Enden vergrößert werden, oder es werden zu diesem Zweck wärmeableitende Körper bevorzugt aus Graphit in deren Nähe eingebracht, die einen stärkeren Wärmeabfluß nach außen zur Ofenwand hin bewirken.

Gemäß einer anderen Methode kann der Unterschied der Wärmebehandlung durch lokale Veränderung der Stromdichte erfolgen, mit der Folge unterschiedlicher Wärmeentwicklung.

Diese Veränderung der Stromdichte kann gemäß der Lehre durch unterschiedliche Widerstände der leitenden Schüttung zwischen zwei Kathoden in einem Acheson-Ofen (Quergraphitierung) erfolgen, für ein Längsgraphitierungsverfahren ist keine derartige Lösung angegeben.

Diese bekannten Methoden weisen für die Praxis erhebliche Nachteile auf. Ein Unterschied von 500 °C für die gewünschten Graphitierungstemperaturen in der Mitte und an den Enden der Kathoden ist durch Wärmesenken allein nicht erreichbar. Unterschiedliche Wärmeableitung nach außen in dem erforderlichen Maße bringt einen erheblichen Energieverlust, der die Fertigung wesentlich verteuert. Der höhere Wärmeverlust nach der Seite des Ofens bedeutet auch eine höhere thermische Beanspruchung, die die Konstruktion des Ofens verteuert oder seine Lebensdauer vermindert. Schließlich ist eine Inhomogenität der wärmeisolierenden bzw. der leitenden Schüttung wenig praktikabel, da das Schüttungsmaterial zur Befüllung in mehreren Schritten eingebracht werden müßte und nach dem Abschluß des Ofenzyklus und dem Entfernen der Kathoden wieder entsprechend seiner Wärmeleitung bzw. elektrischen Leitfähigkeit klassiert werden müßte.

Es ist daher die Aufgabe der vorliegenden Erfindung, ein praktikables Verfahren zur Verfügung zu stellen, um Kathoden herzustellen, die über ihre Länge eine unterschiedliche elektrische Leitfähigkeit aufweisen.

Erfindungsgemäß wird die Aufgabe gelöst, indem zusätzlich eine induktive Aufheizung der Kathodenblöcke bewirkt wird.

Die Erfindung betrifft daher ein Verfahren zur Herstellung von Kathodenblöcken, die zur elektrolytischen Gewinnung von Aluminium einsetzbar sind, dadurch gekennzeichnet, daß eine Längsgraphitierung von carbonisierten Kathodenblöcken durchgeführt wird, und die Graphitierung zumindest anteilsweise durch induktive Aufheizung des Kathodenblocks bewirkt wird, wobei sich die induktiv beheizte Zone in der Mitte der Länge des Kathodenblocks befindet.

Bei den Arbeiten, die zu der vorliegenden Erfindung geführt haben, wurde gefunden, daß durch die Einrührung einer Wärmesenke der spezifische Energieverbrauch erhöht, also schlechter wird. Eine gewünschte Erniedrigung des spezifischen Energieverbrauchs kann jedoch erzielt werden, wenn anstatt die Energie abzuführen, durch konstruktive Maßnahmen dafür Sorge getroffen wird, in festgelegten Bereichen zusätzliche Energie zuzuführen. Dies geschieht erfindungsgemäß durch eine zusätzliche induktive Beheizung, wobei nur der mittlere Abschnitt der späteren Kathode im Kernbereich der Induktionsspule liegt. Dabei kann durch geeignete Wahl von Art und Dicke des Packmediums und der Wärmeleitfähigkeit des Körpers die Länge des Kerns der Induktionsspule so festgelegt werden, daß die Induktionsleistung einen Teil oder die gesamte benötigte Heizleistung erbringt und der nicht im Wirkungsbereich der Induktionsspule liegende Bereich lediglich durch den anliegenden Gleichstrom und/oder durch Wärmeleitung des Kathodenblocks an sich erhitzt wird.

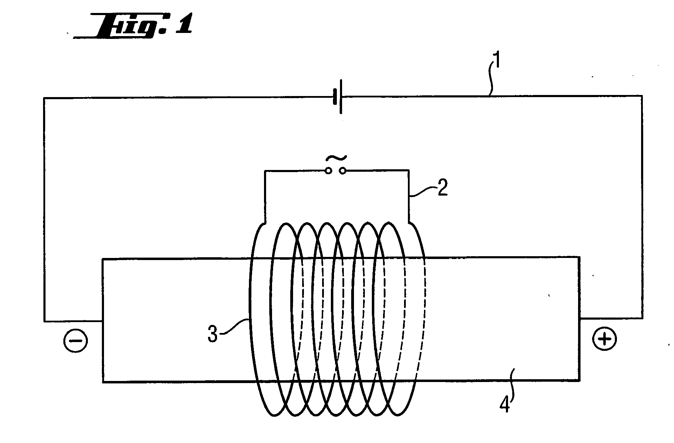

Eine bevorzugte Ausführungsform der Erfindung wird durch die Zeichnung erläutert. Die Fig. 1 zeigt eine Seitenansicht eines Kathodenblocks.

Dabei ist aus Gründen der Übersichtlichkeit nur ein Kathodenblock 4 gezeigt, der durch den im Stromkreis 1 fließenden Gleichstrom im Sinne einer Längsgraphitierung durch die Joule'sche Wärme erhitzt wird. Durch eine Wechselspannungsquelle und Leitungen 2 wird in der Spule 3 ein zeitlich veränderliches magnetisches Feld erzeugt, das in dem Kathodenblock 4 in dessen mittlerer Zone eine Wechselspannung induziert. Entsprechend dem elektrischen Widerstand in dieser Zone fließt dann ein Strom, der eine weitere Erwärmung des Materials in dieser Zone bewirkt.

Bevorzugt ist die Länge der Zone, die induktiv beheizt wird, 25 bis 90 %, besonders bevorzugt 35 bis 80 %, der Länge des gesamten Kathodenblocks.

Bevorzugt ist weiter, daß die induktive Heizung mindestens 10 % und bis zu 100 % der gesamten Heizleistung für den betreffenden Kathodenblock beiträgt. Dabei beträgt die Heizleistung der induktiven Heizung in der Mitte des Kathodenblocks mindestens 10 % mehr als an den äußeren Enden des Kathodenblocks.

Es ist bevorzugt möglich, die induktive Heizung erst im Verlauf des Graphitierungsverfahrens zuzuschalten. Dabei kann sowohl die elektrische Auslegung der direkten Erhitzung nach dem Längsgraphitierungsverfahren mit geringerer Leistung und damit preiswerter und auch die Auslegung der Induktionsfrequenz niedriger und damit preiswerter erfolgen. Die erforderliche Induktionsfrequenz ist eine Funktion aus der Abmessung des Werkstücks, dessen spezifischem elektrischem Widerstand und seiner magnetischen Suszeptibilität. Dabei wird die induktive Heizung bevorzugt erst nach Ablauf von 20 % der gesamten Heizzeit zugeschaltet.

Die Stromdichte in Elektrolysezellen mit den so hergestellten Kathoden zeigt über die Länge der Kathoden eine deutlich geringere Abweichung vom Mittelwert, bevorzugt ist diese Abweichung maximal 20 %, besonders bevorzugt maximal 10 %, und insbesondere maximal 5 %.

Die nach dem erfindungsgemäßen Verfahren hergestellten graphitierten Kathodenblöcke zeigen bei der Herstellung von Aluminium durch elektrolytische Reduktion von Aluminiumoxid in einem Bad von geschmolzenem Kryolith gegenüber den herkömmlichen mit homogener Verteilung der elektrischen Leitfähigkeit eine gleichmäßigere Abnutzung über die Länge der Kathode und daher eine deutlich erhöhte Standzeit.

## Patentansprüche

1. Verfahren zur Herstellung von Kathodenblöcken, die zur elektrolytischen Gewinnung von Aluminium einsetzbar sind, **dadurch gekennzeichnet, daß** eine Längsgraphitierung von carbonisierten Kathodenblöcken durchgeführt wird, und die Graphitierung zumindest anteilsweise durch induktive Aufheizung des Kathodenblocks bewirkt wird, wobei sich die induktiv beheizte Zone in der Mitte der Länge des Kathodenblocks befindet.

2. Verfahren nach Anspruch 1, **dadurch gekennzeichnet, daß** die Länge der Zone, die induktiv beheizt wird, 25 bis 90 % der Länge des gesamten Kathodenblocks beträgt.

3. Verfahren nach Anspruch 1, **dadurch gekennzeichnet, daß** Länge der Zone, die induktiv beheizt wird, 35 bis 80 % der Länge des gesamten Kathodenblocks beträgt

4. Verfahren nach Anspruch 1, **dadurch gekennzeichnet, daß** die induktive Heizung mindestens 10 % und bis zu 100 % der gesamten Heizleistung für den betreffenden Kathodenblock beiträgt.

5. Verfahren nach Anspruch 1, **dadurch gekennzeichnet, daß** die induktive Heizung zu einen ungleichmäßigen Verlauf über die Länge des Kathodenblocks beiträgt, wobei die Heizleistung in der Mitte des Kathodenblocks mindestens 10 % mehr als an den äußeren Enden der Zone mit der induktiven Heizung beträgt.

6. Verfahren nach Anspruch 1, **dadurch gekennzeichnet, daß** die induktive Heizung erst im Verlauf des Graphitierungsverfahrens zugeschaltet wird.

7. Verfahren nach Anspruch 1, **dadurch gekennzeichnet, daß** die induktive Heizung erst nach Ablauf von 20 % der gesamten Heizzeit zugeschaltet wird.

## Claims

1. A process for the production of cathode blocks which can be used for the electrolytic recovery of aluminium,
**characterized in that** carbonized cathode blocks are longitudinally graphitized and at least part of the graphitization is effected by inductive heating of the cathode block, the inductively heated zone being located mid-way along the length of the cathode block.

2. A process according to Claim 1, **characterized in that** the length of the inductively heated zone is 25 to 90% of the length of the entire cathode block.

3. A process according to Claim 1, **characterized in that** the length of the inductively heated zone is 35 to 80% of the length of the entire cathode block.

4. A process according to Claim 1, **characterized in that** the inductive heating contributes at least 10% and up to 100% of the total heating power for the cathode block in question.

5. A process according to Claim 1, **characterized in that** the inductive heating contributes to a non-uniform distribution along the length of the cathode block, the heating power in the middle of the cathode block being at least 10% more than at the outer ends of the inductively heated zone.

6. A process according to Claim 1, **characterized in that** the inductive heating is only switched on during the graphitization process.

7. A process according to Claim 1, **characterized in that** the inductive heating is only switched on after 20% of the total heating time has elapsed.

## Revendications

1. Procédé de fabrication de blocs cathodiques pouvant être utilisés pour la production d'aluminium par électrolyse,
**caractérisé en ce qu'**
on réalise une graphitation longitudinale de blocs cathodiques carbonisés et la graphitation est provoquée au moins proportionnellement par la mise en température inductive du bloc cathodique, la zone chauffée par induction se trouvant au centre de la longueur du bloc cathodique.

2. Procédé selon la revendication 1,
**caractérisé en ce que**
la longueur de la zone qui est chauffée par induction, représente 25 à 90 % de la longueur du bloc cathodique total.

3. Procédé selon la revendication 1,
**caractérisé en ce que**
la longueur de la zone qui est chauffée par induction représente 35 à 80 % de la longueur du bloc cathodique total.

4. Procédé selon la revendication 1,
**caractérisé en ce que**
le chauffage par induction contribue pour au moins 10 à 100 % de la puissance de chauffage totale pour le bloc cathodique concerné.

5. Procédé selon la revendication 1,
**caractérisé en ce que**
le chauffage par induction contribue à un cheminement irrégulier sur la longueur du bloc cathodique, la puissance de chauffage au centre du bloc cathodique étant supérieure d'au moins 10 % à celle des extrémités extérieures de la zone comportant le chauffage par induction.

6. Procédé selon la revendication 1,
**caractérisé en ce que**
le chauffage par induction n'est activé qu'au cours du processus de graphitation.

7. Procédé selon la revendication 1,
**caractérisé en ce que**
le chauffage par induction n'est activé qu'à l'issue de 20 % du temps de chauffage total.
